# EUROPEAN PATENT APPLICATION

(11) **EP 4 512 560 A1**
(43) Date of publication of application: **26.02.2025**
(21) Application number: 24190807.8
(22) Date of filing: 25.07.2024
(51) Int. Cl.: B23K 9/10, B23K 9/32, B23K 37/02, B23K 9/133

(54) **ARC AND WIRE WELDING MACHINE**

(30) Priority: 26.07.2023 IT 202300015741
(71) Applicant: CEA Costruzioni Elettromeccaniche Annettoni S.p.A, 23900 Lecco (LC) (IT)
(72) Inventor: DOLFINI, Adriano, 23900 LECCO (IT)
(74) Representative: Studio Torta S.p.A.

(57) **Abstract**

An arc and wire welding machine is provided with a support base (2); and a cabinet (3) integral with the support base (2), which has a first compartment (22) configured to house an arc generator (23); a second compartment (24), which is arranged above the first compartment (22), has an upward opening and is configured to house a welding wire reel (25); and a cover for closing said opening of the second compartment (24), which is configured to support the welding wire reel (25) in a rotatable manner about an axis (A1) inclined with respect to a horizontal plane by an angle of between 15° and 75°, in particular between 25° and 45°, and facing the plane of the front wall (7).

## Description

### CROSS-REFERENCE TO RELATED APPLICATIONS

This patent application claims priority from Italian patent application no. 102023000015741 filed on July 26, 2023, the entire disclosure of which is incorporated herein by reference.

### TECHNICAL FIELD

The present invention relates to an arc and wire welding machine, in particular of a MIG/MAG type.

### STATE OF THE ART

A welding machine of the type identified above generally comprises an arc generator; a welding wire reel which defines the welding material; a mechanism for feeding and controlling the wire; a ground cable; a shielding-gas cylinder; and a torch, which shoots the arc between the wire and the piece to be welded and feeds the shielding gas into the area where the welding is being carried out.

The welding wire reel must be arranged on a wire unwinder and, at the same time, must be accessible so as to be replaced when the supply of wire is depleted or when, because of a processing change, it is necessary to work with a wire with different characteristics. The handling of wire reels in this type of machine has brought some drawbacks to light which mainly stem from the fact that a complete welding wire reel can weigh up to approximately 15 to 20 kg and its loading requires considerable effort on the part of the operator. Moreover, welding machines of the type described above are used in workshops in sometimes confined spaces where there is limited room to manoeuvre in order to carry out a reel change.

### OBJECT OF THE INVENTION

The object of the present invention is to provide an arc and wire welding machine which is capable of mitigating the drawbacks of the prior art.

In accordance with the present invention, an arc and wire welding machine is provided, the welding machine comprising:
- a support base;
- a cabinet arranged above the support base and comprising:
   - a front wall;
   - a first compartment configured to house an arc generator;
- a second compartment, which is arranged above the first compartment, has an upward opening and is configured to house a welding wire reel; and
- a cover for closing said opening of the second compartment and selectively movable between a closed position and an open position to allow the extraction and insertion of the welding wire reel through said opening;
the second compartment being configured to support the welding wire reel in a rotatable manner about a rotation axis inclined with respect to a horizontal plane by an angle of between 15° and 75°, in particular between 25° and 45°, and facing the plane of the front wall.

Thanks to the present invention, the cover does not modify the bulk in plan both in the closed position and in the open position and the welding wire reel can be inserted from above. In this manner, an operator facing the front wall is facilitated in inserting and extracting the welding wire reel. In other words, the claimed configuration allows the operator to load and unload the welding wire reel, without straining the body and without having to move to one side of the machine or to stoop down with an easy visibility of the loading and unloading operations.

Moreover, the fact that the welding wire reel is inclined allows the space occupied in plan by the welding machine to be reduced, by reducing its depth compared to a state in which the welding wire reel is positioned in a "flat" position.

In particular, the second compartment has a bottom wall for housing the welding wire reel inclined from a back wall downwards and towards a front wall of the cabinet at an angle of between 15° and 75°, in particular between 25° and 45°.

In this manner, it is possible to also mount auxiliary equipment directly on the bottom wall with the same benefits as described above.

In particular, the cover comprises a window that makes it possible to view the degree of depletion of the welding wire reel; in particular, the window is defined by a through opening and/or a transparent portion of the cover.

In this manner, the operator has an immediate view of the second compartment and the state of the welding wire reel and any auxiliary equipment contained in the second compartment.

In particular, the welding machine comprises a wire drive unit arranged within said second compartment and configured to feed the welding wire through the front wall and downwards.

In this manner, it is ensured that the wire feeding device is accessible in order to insert a new welding wire into the wire feeding device after the loading of a new welding wire reel.

In particular, the cabinet comprises an opening for the passage of the wire at said second compartment, preferably along a front wall of the cabinet.

In this manner, the welding wire reel comes out of the cabinet in the upper portion of the front wall of the cabinet and is easily controllable by an operator.

In order to facilitate the operation of the welding machine, a control panel is also arranged along a front wall of the cabinet.

In accordance with one embodiment of the present invention, the support base comprises a platform for supporting the cabinet and a gas cylinder arranged at the rear of the cabinet, in particular said gas cylinder extends vertically beyond said cabinet.

The gas cylinder used in the welding process is conveniently associated with the cabinet where the arc generator and the welding wire are housed.

In particular, the platform is mounted on wheels so as to allow a high manoeuvrability of the welding machine.

In accordance with an embodiment of the present invention, the cabinet comprises a third compartment, which is arranged below the first compartment and is configured to house a welding-torch cooling system in proximity to the generator.

In particular, the welding machine comprises two handles having the shape of horns, which allow the welding machine to be moved and define an element for supporting wires or cables.

### BRIEF DESCRIPTION OF THE FIGURES

Further characteristics and advantages of the present invention will become apparent from the following description of non-limiting example embodiments, with reference to the figures of the accompanying drawings, wherein:
- Figure 1 is a front and lateral view, with parts removed for clarity, of an arc and wire welding machine in accordance with the present invention;
- Figure 2 is a section view, with details removed for clarity, of the welding machine of Figure 1; and
- Figure 3 is a front view from above, with parts removed for clarity, of a detail of the welding machine of Figure 1.

### PREFERRED EMBODIMENT OF THE INVENTION

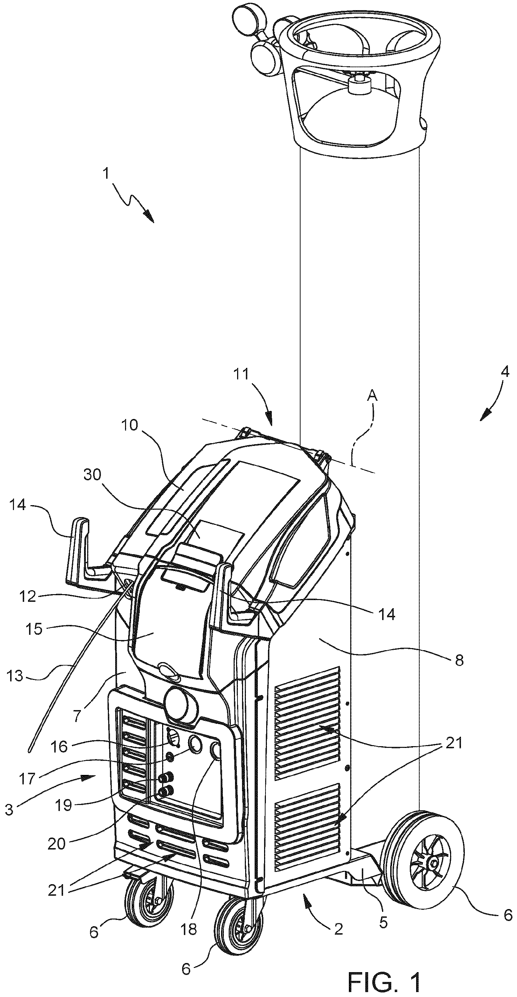

In Figure 1, the reference number 1 indicates an arc and wire welding machine, in particular of a MIG/MAG type.

The welding machine 1 comprises a support base 2; a cabinet 3; and a gas cylinder 4.

The support base 2 essentially comprises a platform 5, which is provided with wheels 6, two of which are steerable, so as to define a trolley and is configured to support the cabinet 3 and, at the rear, the gas cylinder 4.

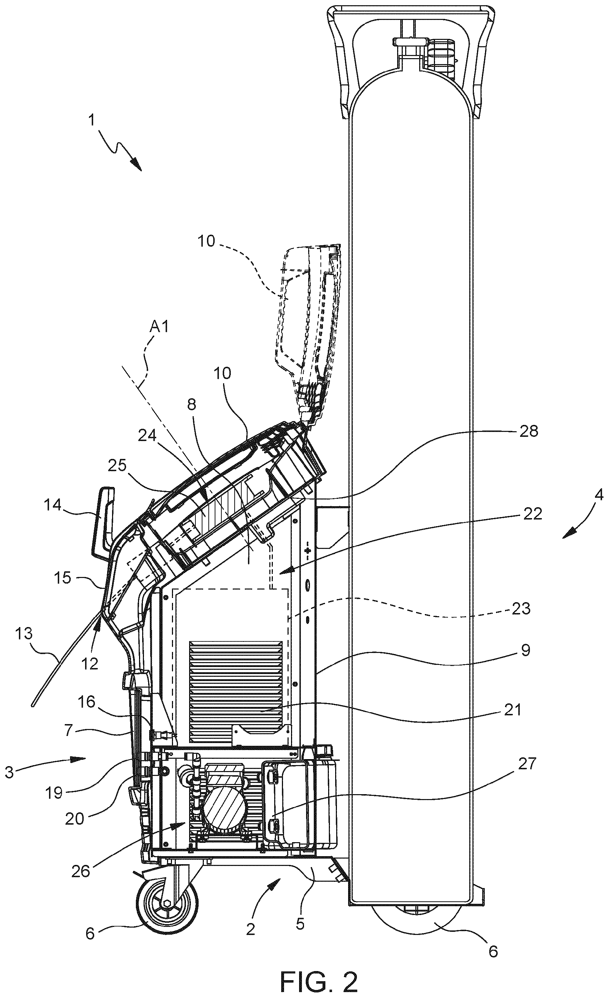

The cabinet 3 extends predominantly in a vertical direction and comprises a front wall 7, two side walls 8 (only one of which is visible in Figure 1) and a rear wall 9 (Figure 2), and is provided with a pivotable cover 10 configured to close the upper end of the cabinet 3 and is selectively movable between a closed position and an open position around a hinge 11 of a horizontal axis A arranged at the rear wall 9 (Figure 2). In this particular case, the pivotable cover comprises a window 30 defined by a through opening and/or a transparent portion of the pivotable cover 10.

In accordance with a variant not illustrated in the accompanying figures, the cover is hinged to a wall other than the rear wall.

In a further variant not illustrated, the cover is removable.

The cabinet 3 comprises an opening 12 arranged along the front wall 7 so as to allow the passage of the welding wire 13; two handles 14, which are configured to guide the welding machine 1 and are arranged along the front wall 7 at the respective side walls 8. In particular, the handles 14 are shaped like horns that point upwards.

The cabinet 3 comprises a control panel 15 arranged in the upper portion of the front wall 7, in this particular case between the two handles 14; three electrical connectors 16, 17 and 18, which are arranged along the central portion of the front wall 7, in this particular case below the control panel 15, in order to selectively connect the welding machine 1 to a piece to be welded by means of an electrical cable, not illustrated in the accompanying figures. The electrical connectors 16, 17 and 18 configure a positive pole, a negative pole and a neutral pole, respectively. The cabinet 3 comprises two couplings 19 and 20, which are arranged along the front wall of the cabinet 3 and configured to be connected to water ducts, not illustrated in the accompanying figures, for supplying cooling water to and extracting cooling water from the cabinet 3, respectively.

In accordance with a variant not illustrated, the couplings are omitted because an air cooling is provided.

The cabinet 3 further comprises a plurality of ventilation openings 21.

With reference to Figure 2, the cabinet 3 comprises three compartments: a compartment 22 configured to house an arc generator 23, in this particular case an inverter; a compartment 24 configured to house a welding wire reel 25 and closed by the pivotable cover 10; and a compartment 26 configured to house a water-based cooling system 27.

In a variant of the present invention that is not illustrated, the cooling system is omitted as well as the relative compartment.

The compartment 22 has a bottom wall 28 inclined at an angle of between 15° and 75° so as to house along the bottom wall 28 the welding wire reel 25 with its axis perpendicular to the bottom wall 28. The bottom wall 28 is inclined from the rear wall 9 of the cabinet 3 downwards and towards the front wall 7.

In general, the compartment 22 is configured to support the welding wire reel 25 in a rotatable manner about a rotation axis A1 inclined with respect to a horizontal plane by an angle of between 15° and 75°, in particular between 25° and 45°, and, from the bottom wall 28, faces the plane of the front wall 7. In practice, the rotation axis A1 is the axis of a winder contained in the compartment 22 and not depicted in the accompanying figures on which the welding wire reel 25 is arranged.

The compartment 22 has an upward opening and the pivotable cover 10 is selectively movable between a closed position and an open position to allow extraction and insertion of the welding wire reel 25 through said opening.

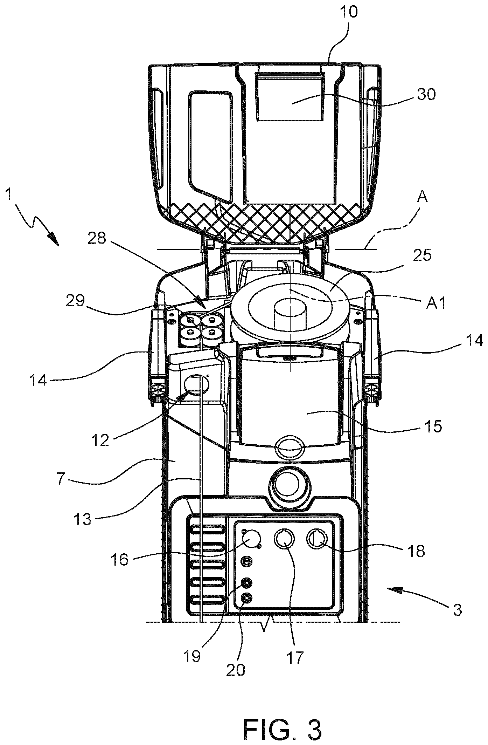

With reference to Figure 3, the welding machine comprises a drive unit 29 for feeding and unwinding the wire 13 from the welding wire reel 25 through the opening 12.

It is finally apparent that modifications and variations can be made to the object of the present invention described herein without departing from the scope of protection of the appended claims.

## Claims

1. An arc and wire welding machine, the welding machine (1) comprising:
- a support base (2);
- a cabinet (3) arranged above the support base (2) and comprising:
- a front wall (7);
- a first compartment (22) configured to house an arc generator (23);
- a second compartment (24), which is arranged above the first compartment (22), has an upward opening and is configured to house a welding wire reel (25); and
- a cover (10) for closing said opening of said second compartment (24) and selectively movable between a closed position and an open position to allow extraction and insertion of the welding wire reel (25) through said opening;
the second compartment (22) being configured to support the welding wire reel (25) in a rotatable manner about an axis (A1) inclined with respect to a horizontal plane by an angle of between 15° and 75°, in particular between 25° and 45°, and facing the plane of said front wall (7).

2. The welding machine as claimed in any one of the preceding claims wherein the second compartment (22) has a bottom wall (28) for housing the welding wire reel (25) inclined from a back wall (9) downwards and towards the front wall (7) of the cabinet (3) by an angle of between 15° and 75°, in particular between 25° and 45°.

3. The welding machine as claimed in claim 2 wherein the cover (10) comprises a window (30) for viewing the degree of depletion of the welding wire reel (25), in particular the window (30) is defined by a through opening and/or a transparent portion of the cover (10).

4. The welding machine as claimed in any one of the preceding claims, and comprising a wire drive unit (29) arranged within said second compartment (24) and configured to feed the welding wire (13) through the front wall (9) and downwards.

5. The welding machine as claimed in any one of the preceding claims, wherein the cabinet (3) comprises an opening (12) for passing the welding wire (13) at said second compartment (24) along a front wall (7) of the cabinet (3).

6. The welding machine as claimed in any one of the preceding claims, and comprising a control panel (15) arranged along a front wall (7) of the cabinet.

7. The welding machine as claimed in any one of the preceding claims, wherein the support base (2) is configured to support a gas cylinder (4) arranged at the rear of the cabinet (3), in particular said gas cylinder (4) extends vertically beyond said cabinet (3).

8. The welding machine as claimed in claim 7, wherein the support base (2) is mounted on wheels (6).

9. The welding machine as claimed in any one of the preceding claims, wherein the cabinet (3) comprises a third compartment (26), which is arranged below the first compartment (22) and is configured to house a cooling system (27) .

10. The welding machine as claimed in any one of the preceding claims, and comprising two handles (14) having the shape of horns.
